# EUROPÄISCHE PATENTSCHRIFT

(11) **EP 3 446 893 B1**
(45) Veröffentlichungstag und Bekanntmachung des Hinweises auf die Patenterteilung: **29.04.2020**
(21) Anmeldenummer: 18172215.8
(22) Anmeldetag: 15.05.2018
(51) Int. Cl.: B60C 11/12

(54) **FAHRZEUGLUFTREIFEN**
PNEUMATIC TYRES FOR A VEHICLE
PNEUMATIQUE DE VÉHICULE

(30) Priorität: 25.08.2017 DE 102017214878
(43) Veröffentlichungstag der Anmeldung: 27.02.2019
(73) Patentinhaber: Continental Reifen Deutschland GmbH, 30165 Hannover (DE)
(72) Erfinder: Schlittenhard, Jan, 30900 Wedemark (DE); Bauer, Claudia, 31542 Bad Nenndorf (DE); Vennebörger, Martin, 30625 Hannover (DE)
(74) Vertreter: Finger, Karsten

(56) Entgegenhaltungen:
- DE-A1-102010 016 906
- DE-A1-102012 105 515

## Beschreibung

Die Erfindung betrifft einen Fahrzeugluftreifen für Personenkraftwagen, insbesondere für den Einsatz unter winterlichen Fahrbedingungen, mit einem Laufstreifenprofil mit zumindest einer in Umfangsrichtung umlaufenden Blockreihe, deren Profilblöcke durch Querrillen voneinander getrennt sind und deren Profilblöcke in Draufsicht mit zumindest zwei, im Wesentlichen als Gerade ausgebildeten Feineinschnitten versehen sind, welche etwa parallel zueinander angeordnet sind, wobei jeder Feineinschnitt in Draufsicht eine Breite von 0,1 bis 0,6 mm und wenigstens einen Abschnitt einer größeren Breite in Funktion einer Schneetasche aufweist, wobei - in Draufsicht - in Längserstreckung des Feineinschnittes wenigstens zwei Abschnitte der größeren Breite angeordnet sind, welche beabstandet zueinander angeordnet sind, so dass Abschnitte der ersten Breite mit den Abschnitten der größeren Breite einander abwechseln, wobei entlang einer gedachten Geraden, welche etwa senkrecht auf der Längsachse eines Feineinschnittes steht, bei zwei unmittelbar benachbarten Feineinschnitten der eine Feineinschnitt die erste Breite und der unmittelbar benachbarte Feineinschnitt die größere Breite aufweist.

Aus der DE10 2010 016 906 A1 ist ein Fahrzeugluftreifen eingangs genannter Art bekannt. Der Laufstreifen dieses Fahrzeugluftreifen weist welcher Profilelemente, wie Profilblöcke, auf, die jeweils mit einer Vielzahl von zumindest im Wesentlichen und in Laufstreifenquerrichtung erstreckenden Einschnitten versehen sind. Es sind Einschnitte vorgesehen, welche in ihrem Verlauf lokal an zumindest einer Stelle durch eine lochartige Öffnung verbreitert sind, welche sich in radialer Richtung entlang des Tiefenverlaufes des Einschnittes erstreckt. Die Löcher weisen einen Durchmesser auf, welcher um mindestens 50 % größer ist als die jeweilige Einschnittbreite.

Weitere Fahrzeugluftreifen mit Laufstreifenprofilen mit Feineinschnitten sind in unterschiedlichen Ausführungsvarianten bekannt. Solche Laufstreifenprofile können laufrichtungsgebunden, nicht laufrichtungsgebunden und/oder als asymmetrische Profile ausgeführt sein. Die Feineinschnitte in den Profilblöcken eines Laufstreifens sind für einen guten Wintergriff, insbesondere auf Schnee und Eis, unerlässlich.

Es gibt eine Vielzahl an bekannten Ausbildungen von Feineinschnitten. Am bekanntesten ist eine Ausbildung, bei der der Feineinschnitt in Profilaufsicht sinusförmig oder zickzack-förmig ausgebildet ist und in seinem Tiefenverlauf innerhalb des Profilblockes unverändert ist (2-dimensionaler Feineinschnitt). Es sind aber auch verschiedenste Feineinschnitte bekannt, deren Ausbildung sich mit dem Tiefenverlauf innerhalb des Profilblockes ändert, z.B. eine veränderliche Amplitude (Auslenkung) aufweisen (3-dimensionaler Feineinschnitt).

Über ihren Längsverlauf gerade verlaufende Feineinschnitte sind dem Fachmann ebenfalls hinlänglich bekannt.

Ein Feineinschnitt kann den Profilblock vollständig queren oder innerhalb des Profilblockes enden.

Die Feineinschnitte stellen zusätzliche Griffeigenschaften im Laufstreifen auf winterlichen Fahrbahnen, wie auf Schnee, Schneematsch oder Eis, zur Verfügung und haben infolge von gegenseitigen Abstützungseffekten der Feineinschnittwände eine stabilisierende Wirkung auf die Profilblöcke.

Die Schneetaschen der Feineinschnitte hingegen, also die Abschnitte größerer Breite, dienen bei winterlichen Bedingungen vornehmlich dazu, Schnee aufzunehmen, um die Schnee/Schnee - Reibung zu erhöhen und derart eine bessere Haftung des Reifens auf winterlicher Fahrbahn zu ermöglichen. Durch die Schneetaschen, deren Wände sich aufgrund der größeren Breite der Schneetaschen, nicht oder nur unzureichend gegeneinander abstützen können, findet eine Erweichung des Profilblockes statt.

Als Folge ist die Steifigkeit im Profilblock sehr unterschiedlich, insbesondere kann der mittige Bereich des Profilblockes erweicht sein, wodurch für die Kraftübertragung nicht die gesamte Profilblockfläche sondern nur der steifere Teilbereich des Profilblockes herangezogen werden kann, wodurch die Kraftübertragung dann nicht optimal ist.

Der Erfindung liegt die Aufgabe zugrunde, bei einem Fahrzeugluftreifen der eingangs genannten Art durch eine konstruktiv einfache Maßnahme die Steifigkeit der Profilblöcke über dessen Profilblockoberfläche zu vergleichmäßigen.

Gelöst wird die gestellte Aufgabe erfindungsgemäß dadurch, dass die Abschnitte der größeren Breite innerhalb eines Profilblocks zwei bis n unterschiedliche Breiten, bevorzugt 2 bis 4 unterschiedliche Breiten, besonders bevorzugt 2 unterschiedliche Breiten aufweisen.

Die vorgenannte gedachte Gerade kann durch jede Schneetasche gelegt werden und entlang dieser Geraden ist über die unmittelbar benachbarten Feineinschnitte des Profilblockes hinweg immer ein Wechsel von zweiter Breite mit erster Breite erhalten.

Somit ist eine abwechselnde Anordnung von Abschnitten der ersten Breite und von Abschnitten der größeren Breite sowohl in Richtung der Längserstreckung des Feineinschnittes als auch senkrecht hierzu von zwei unmittelbar benachbarten Feineinschnitten erhalten. In Bezug auf zwei benachbarte Feineinschnitte ist somit sichergestellt, dass in Richtung einer Senkrechten auf die Längserstreckung des Feineinschnittes eine größere Breite eines Feineinschnittes mit der ersten und somit geringeren Breite des weiteren Feineinschnittes abwechselt.

Es ist somit ein Profilblock mit zwei oder mehr Feineinschnitten geschaffen, bei dem die den Profilblock aufweichenden Schneetaschen derart über die Fläche des Profilblockes verteilt angeordnet sind, dass eine Vergleichmäßigung der Steifigkeit der Profilblockoberfläche erhalten ist. Dieses wirkt sich positiv auf die Kraftübertragung dieses Profilblockes aus. Die unterschiedlichen Breiten der Abschnitte der größeren Breite können innerhalb eines Feineinschnittes des Profilblockes angeordnet sein. Die Abschnitte der unterschiedlichen Breiten der größeren Breiten können auch derart über die Feineinschnitte des Profilblockes angeordnet sein, dass ein Feineinschnitt die größere erste Breite aufweist und ein anderer Feineinschnitt die größere zweite Breite aufweist. Hierdurch ist die Vergleichmäßigung der Steifigkeit der Profilblockoberfläche besonders gut einzustellen.

"Abschnitte größerer Breite" werden auch als "Schneetaschen" bezeichnet.

Vorteilhaft ist es, wenn die größere Breite, also die Breite der Schneetaschen um 1,3 x bis 5 x, vorzugsweise um 1,5 x bis 3 x breiter als die erste Breite ist. Die Breite bemisst sich senkrecht auf die Längserstreckung des Feineinschnittes.

Zweckmäßig ist es, wenn die Schneetaschen eine im Wesentlichen konstante Breite aufweisen. Eine solche Ausführung hat den technischen Vorteil, dass sich die Schneetaschen im Schneeeingriff gleichmäßig füllen und somit eine einheitliche Kraftübertragung gewährleistet wird. Zudem lassen sich diese einfach herstellen und erzeugen auf der Oberfläche des Profilblockes ein klares, gefälliges Erscheinungsbild.

Vorteilhaft ist es, wenn die größere Breite der Schneetaschen in einem Bereich von 0,4 bis 1,5 mm liegt, bevorzugt in einem Bereich von 0,6 bis 0,9 mm liegt. Dieses Breite bietet den optimalen Wirkbereich. Sind die Schneetaschen schmäler ausgeführt, bewirken sie keinen ausreichenden "Schneetascheneffekt"; sind diese breiter ausgeführt, erweichen diese den Profilblock zu stark und eine gleichmäßige einheitliche Blocksteifigkeit kann nicht mehr sicher eingestellt werden.

Zweckmäßig ist es, wenn die erste Breite etwa 0,4 mm und eine erste größere Breite etwa 0,6 mm und eine zweite größere Breite etwa 0,8 mm beträgt. Dieses ist vorteilhaft, weil Feineinschnitte dieser Breite sehr gute Griffeigenschaften besitzen und eine hervorragende Abstützung der Profilelemente gewährleisten können. Zudem weisen die die Feineinschnitte produzierenden Lamellenbleche in den Reifenformen eine ausreichende Standfestigkeit auf. Werden diese Bleche in den Formen zu dünn, können sie bei den wechselnden Belastungen beim Einformen des Reifenrohlings und beim Ausformen des vulkanisierten Reifens verbiegen, abbrechen oder andersartig beschädigt werden. Außerdem ermöglichen sehr dünne Feineinschnitte im Reifen eine nur schlechte Verzahnung mit der winterlich glatten Straßenoberfläche, so dass nur geringe Brems-, Traktions- oder Seitenführungskräfte übertragen werden können.

Vorteilhaft ist es, wenn zwei oder drei Feineinschnitte in einem Profilblock angeordnet sind, von denen jeder mit Schneetaschen versehen ist. Sind mehr als zwei Feineinschnitte im Profilblock angeordnet, so wechseln die ersten Abschnitte mit den zweiten Abschnitten entlang einer gedachten Geraden über alle Feineinschnitte einander ab. Durch diese Anordnung wird gewährleistet, dass die Schneetaschen gleichmäßig über die Blockoberfläche verteilt und somit die Griffeigenschaften optimiert sind.

Zweckmäßig ist es, wenn die Blockreihe eine Schulterblockreihe ist. Die Schulterblöcke haben über den Reifenumfang üblicherweise eine ähnliche axiale Erstreckung und sind zudem häufig annähernd parallel zu den Querrillen mit Feineinschnitten versehen. Hierdurch lässt sich das alternierende Schneetaschenkonzept in besonders einfacher Weise realisieren. Zudem unterstützt die Ausbildung der Schneetaschen in den Schulterblockreichen die Schnee-Schnee-Reibung und erhöht damit die Schneeperformance.

In einer bestimmten Ausführung der Erfindung ist es zweckmäßig, wenn innerhalb eines Feineinschnittes wenigstens alle mittig angeordneten Abschnitte der ersten Breite gleiche Längen aufweisen und wenn wenigstens alle mittig angeordneten Abschnitte der größeren Breite gleiche Längen aufweisen. Eine solche Ausführung eignet sich besonders für Blockgeometrien, bei denen Feineinschnitte mit ähnlichen Längen zum Einsatz kommen. Es ist eine gleichmäßige Verteilung der Schneetaschen über die Blockoberfläche sowie ein einheitlicher blockerweichender Schneetascheneffekt erhalten.

"Mittig angeordnete Abschnitte" meint alle Abschnitte eines Feineinschnittes, welche zwischen den beiden End-Abschnitten dieses Feineinschnittes liegen.

In einer alternativen Ausführung der Erfindung ist es zweckmäßig, wenn innerhalb eines Feineinschnittes alle Abschnitte der ersten Breite eine ungleiche Länge aufweisen und/oder wenn alle Abschnitte der größeren Breite eine oder mehrere ungleiche Längen aufweisen. Die Freiheitsgrade zur Vergleichmäßigung der Profilblocksteifigkeit sind erhöht.

In einer weiteren alternativen Ausführung der Erfindung ist es zweckmäßig, dass ein erster Feineinschnitt des Profilblockes End-Abschnitte der größeren Breite aufweist und über seine Längserstreckung eine größere Anzahl an Abschnitten der größeren Breite aufweist als ein benachbarter zweiter Feineinschnitt, welcher End-Abschnitte der ersten Breite aufweist und wobei der erste Feineinschnitt über seine Längserstreckung gleich große Abschnitte der größeren Breite aufweist, während der zweite Feineinschnitt randlich gleiche Abschnitte einer ersten größeren Breite und mittig einen Abschnitt einer zweiten größeren Breite aufweist und wobei die zweite größere Breite größer als die erste größere Breite ist.

In einer wiederum weiteren alternativen Ausführung der Erfindung ist es zweckmäßig, wenn innerhalb eines Feineinschnittes alle Abschnitte der ersten Breite eine gleiche Länge aufweisen und/oder wenn alle Abschnitte der größeren Breite eine gleiche Länge aufweisen.

Zweckmäßig ist es, wenn jeder zweite Feineinschnitt eines Profilblockes in etwa gleich ausgebildet ist. Je einheitlicher die Aufteilung erfolgt, umso gleichmäßiger ist die Steifigkeitsverteilung.

In einer weiteren Ausführung weisen zumindest unmittelbar benachbarte Feineinschnitte eines Profilblockes ungleiche Längen der Abschnitte der ersten Breite und/oder der größeren Breite auf. Die Freiheitsgrade zur Vergleichmäßigung der Profilblocksteifigkeit sind erhöht.

In einer wiederum anderen Ausführung der Erfindung ist innerhalb eines Profilblockes wenigstens ein Feineinschnitt angeordnet, bei dem die Abschnitte der ersten Breite ungleich lang zu den Abschnitten der größeren Breite sind und es ist wenigstens ein Feineinschnitt angeordnet, bei dem die Abschnitte der ersten Breite gleich lang wie die Abschnitte der größeren Breite sind. Die Freiheitsgrade zur Vergleichmäßigung der Profilblocksteifigkeit sind erhöht.

Zweckmäßig ist es, wenn die Länge eines Abschnittes der ersten Breite und/oder eines Abschnittes der zweiten, größeren Breite zwischen 3% und 45%, vorzugsweise zwischen 8% und 30% der Länge des Feineinschnittes beträgt. Durch diese Anordnung lässt sich in einfacher Weise die Steifigkeitsverteilung in einem Block auf das gewünschte Maß einstellen und gleichmäßig über diesen verteilen. Die Längserstreckung eines Feineinschnittes bemisst sich entlang seiner Längserstreckung.

Zweckmäßig ist es, wenn die Schneetaschen in Bezug auf ihre Breite mittig auf den Feineinschnitt aufgesetzt sind. Die größere Breite ist somit in Bezug auf die Längsachse bzw. Null-Linie nach oben und nach unten gleich. Es wird eine symmetrische Schneetasche ausgebildet, aufgrund derer sich in besonders einfacher Weise eine Aufteilung eines Profilblocks mit einer vergleichmäßigten Steifigkeit erreichen lässt.

Die Steifigkeit des Profilblockes ist je nach Anforderung durch gezielte Anordnung der Abschnitte der Schneetaschen innerhalb eines Profilblockes und über deren Länge ist einzustellen. Die nachfolgenden drei Ausführungen stellen je ein Beispiel für eine steife Variante eines Profilblockes, für eine medium steife Variante eines Profilblockes und für eine weiche Variante eines Profilblockes dar. Es wird die Länge aller in dem Profilblock angeordneten Feineinschnitte auf 100% gesetzt und die Länge der Schneetaschen in Prozent für die beiden äußeren Feineinschnitte und die Länge der Schneetaschen für den bzw. die mittleren Feineinschnitte angegeben. Die "gemittelte Längen der Schneetaschen" geben die durchschnittliche Länge aller Schneetaschen eines Profilblockes an. Bevorzugt weist der Profilblock der nachfolgenden Ausführungsbeispiele 3 Feineinschnitte auf.

**Ausführungsbeispiel 1:**

| **Steife Variante** | |
|---|---|
| | **%** |
| Lamellenlänge aller Feineinschnitte des Profil blockes | 100 |
| Länge der Schneetaschen der beiden äußeren Feineinschnitte | 5-35 |
| Länge der Schneetaschen des/der mittleren Feineinschnitte | 25-50 |
| Gemittelte Längen der Schneetaschen | 10-40 |

**Ausführungsbeispiel 2:**

| **Medium steife Variante** | |
|---|---|
| | **%** |
| Lamellenlänge aller Feineinschnitte des Profil blockes | 100 |
| Länge der Schneetaschen der beiden äußeren Feineinschnitte | 10-40 |
| Länge der Schneetaschen des/der mittleren Feineinschnitte | 40-90 |
| Gemittelte Längen der Schneetaschen | 41-65 |

**Ausführungsbeispiel 3:**

| **Weiche Variante** | |
|---|---|
| | **%** |
| Lamellenlänge aller Feineinschnitte des Profil blockes | 100 |
| Länge der Schneetaschen der beiden äußeren Feineinschnitte | 35-75 |
| Länge der Schneetaschen des/der mittleren Feineinschnitte | 40-95 |
| Gemittelte Längen der Schneetaschen | 66-95 |

Weitere Merkmale, Vorteile und Einzelheiten der Erfindung werden nun anhand der schematischen Zeichnungen, welche Ausführungsbeispiele darstellen, näher beschrieben.

Dabei zeigen die
Fig. 1 eine Draufsicht auf einen Profilblock eines Laufstreifens eines erfindungsgemäßen Fahrzeugluftreifens und
Fig. 2 eine Draufsicht auf einen anderen Profilblock eines Laufsteifens eines erfindungsgemäßen Fahrzeugluftreifens.

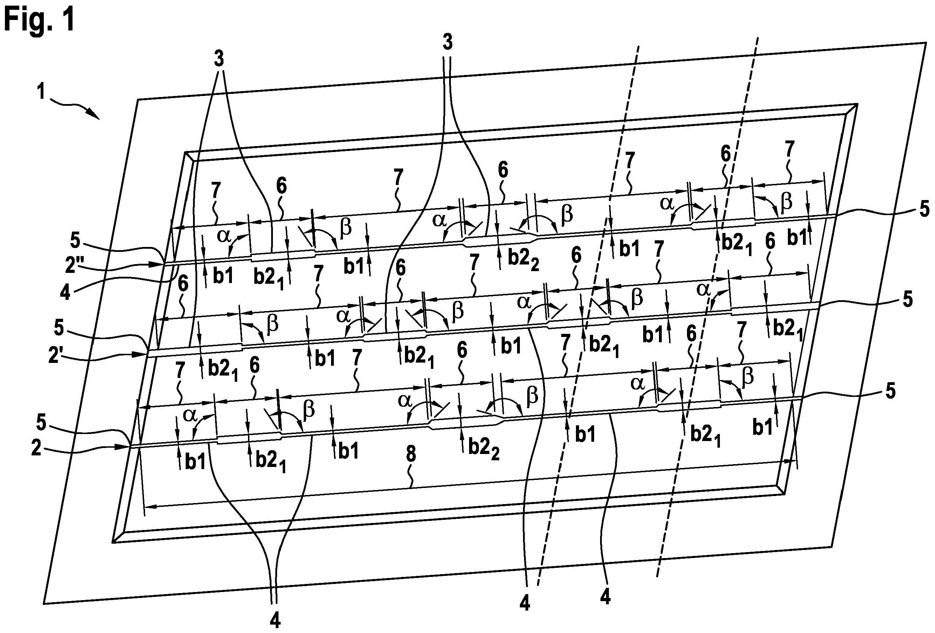

Die Erfindung befasst sich mit besonderen Ausführungen von Feineinschnitten in Profilblöcken in zumindest einer Blockreihe eines Laufstreifens eines Fahrzeugluftreifens in Radialbauart, insbesondere eines Winterreifens für Personenkraftwagen. Die Fig. 1 zeigt eine Draufsicht auf einen Profilblock 1 eines Laufstreifens eines erfindungsgemäßen Fahrzeugluftreifens. Dieser Profilblock 1 gehört zu einer Schulterblockreihe und ist mit drei im Wesentlichen als Gerade ausgebildeten Feineinschnitten 2, 2', 2" versehen, welche parallel zueinander sowie parallel zu Profilblockkanten angeordnet sind. Jeder Feineinschnitt 2, 2', 2" weist in Draufsicht eine Breite b1 von 0,2 mm und wenigstens drei Abschnitte 3 einer größeren Breite b2_{(1,2)} auf, welche aufgrund ihrer Funktion auch als Schneetaschen 3 bezeichnet werden. Diese Schneetaschen 3 sind in jedem Feinschnitt 2, 2', 2" beabstandet voneinander angeordnet, so dass die Abschnitte der größeren Breite 3 mit Abschnitten der üblichen Breite 4, auch als "erste Breite" bezeichnet, einander abwechseln. Zusätzlich wechselt in Richtung einer gedachten Geraden (gestrichelt dargestellt), welche senkrecht auf der Längserstreckung der Feineinschnitte 2, 2', 2" steht und über alle Feineinschnitte des Profilblocks 1 reicht, die erste Breite b1 des einen Feineinschnittes 2 mit der größeren Breite b2_{(1,2)} des unmittelbar benachbarten Feineinschnittes 2'. Somit wechseln -in Draufsicht auf den Profilblock 1 - sowohl in Längs- als auch in Querrichtung in Bezug auf alle Feineinschnitte - die erste normale Breite b1 mit der größere Breiten b2_{(1,2)} ab. Hierdurch ist über den Profilblock 1 eine vergleichmäßigte Steifigkeit erhalten.

In der Fig. 1 sind drei Feineinschnitte 2, 2', 2" vorgesehen.

Die beiden äußeren Feineinschnitte 2, 2" sind etwa gleich ausgebildet und weisen je drei Schneetaschen 3 auf, welche gleichmäßig über die Längserstreckung des Feineinschnittes 2, 2" verteilt angeordnet sind. Diese Schneetaschen 3 weisen zwei unterschiedlich breite größere Breiten b2_{1,2} auf. Von den drei Schneetaschen 3 dieser beiden Feineinschnitte 2, 2" weisen die beiden äußeren Schneetaschen eine größere erste Breite b2₁ von 0,4 mm und die mittlere Schneetasche eine größere zweite Breite b2₂ von 0,6 mm auf und ist somit breiter als die erste Breite und auch breiter als die größere Breite b2₁ der äußeren Schneetaschen. Die Enden 5 dieser Feineinschnitte 2, 2" werden jeweils aus Abschnitten 4 der ersten, normalen Breite b1 gebildet. Die Längen der Abschnitte dieser Feineinschnitte 2, 2" betragen, betrachtet entlang der Längserstreckung von links nach rechts: Länge des Abschnittes der ersten üblichen Breite 7 von etwa 6 mm, Länge der Schneetasche 6 von etwa 5 mm, Länge des Abschnittes der ersten üblichen Breite 7 von etwa 12 mm, Länge der Schneetasche 6 von etwa 5 mm, Länge des Abschnittes der ersten üblichen Breite 7 von etwa 12 mm, Länge der Schneetasche 6 von etwa 5 mm und Länge des Abschnittes der ersten übliche Breite von etwa 6 mm.

Der Übergang von der ersten Breite zur größeren Breite bzw. der Übergang von der größeren Breite zur ersten Breite ist durch je eine Gerade gebildet, welche mit der Längsrichtung des Abschnittes der ersten Breite einen Winkel α bzw. β in einem Bereich von 90° bis 170° einschließt. Die größten Winkel α bzw. β sind in dem mittigen Bereich der Profilblockoberfläche und die kleinsten Winkel an den Enden der Feineinschnitte angeordnet. Die Winkel α bzw. β dieser Feineinschnitte 2, 2" betragen, betrachtet entlang der Längserstreckung von links nach rechts : α = 90°, β = 120°; α = 140°, β = 160°; α = 140°, β = 90°.

Der mittlere Feineinschnitt 2' weist vier Schneetaschen 3 auf, von denen je eine Schneetasche 3 an jedem Ende dieses Feineinschnittes 5 als End-Abschnitt angeordnet ist und die zwei weiteren Schneetaschen 3 sind derart über die Längserstreckung des Feineinschnittes 2' verteilt, dass Abschnitte der größeren Breite 3 mit Abschnitten der ersten Breite 4 abwechseln. Alle Schneetaschen 3 dieses mittleren Feineinschnittes 2' weisen die gleiche Breite b2₁ von etwa 0,4 mm auf, wobei die Breite b2₁ im Wesentlichen konstant ist. Die erste Breite b1 beträgt etwa 0,2 mm. Die Längen der Abschnitte dieser Feineinschnitte 2, 2" betragen, betrachtet entlang der Längserstreckung von links nach rechts: Länge der Schneetasche 6 von etwa 6,5 mm, Länge des Abschnittes der ersten üblichen Breite 7 von etwa 9,5 mm, Länge der Schneetasche 6 von etwa 5 mm, Länge des Abschnittes der ersten üblichen Breite 7 von etwa 9,5 mm, Länge der Schneetasche 6 von etwa 5 mm, Länge des Abschnittes der ersten übliche Breite von etwa 9,5 mm und Länge der Schneetasche 6 von etwa 6 mm.

Der Übergang von der größeren Breite zur ersten Breite bzw. der Übergang von der ersten Breite zur größeren Breite ist durch je eine Gerade gebildet, welche mit der Längsrichtung des Abschnittes der ersten Breite einen Winkel α bzw. β in einem Bereich von 90° bis 140° einschließt. Die größten Winkel α bzw. β sind in dem mittigen Bereich der Profilblockoberfläche und die kleinsten Winkel an den Enden der Feineinschnitte angeordnet. Die Winkel α bzw. β dieser Feineinschnitte 2, 2" betragen, betrachtet entlang der Längserstreckung von links nach rechts : β = 90°; α = 120°, β = 130°; α = 140°, β = 130° und α = 90°.

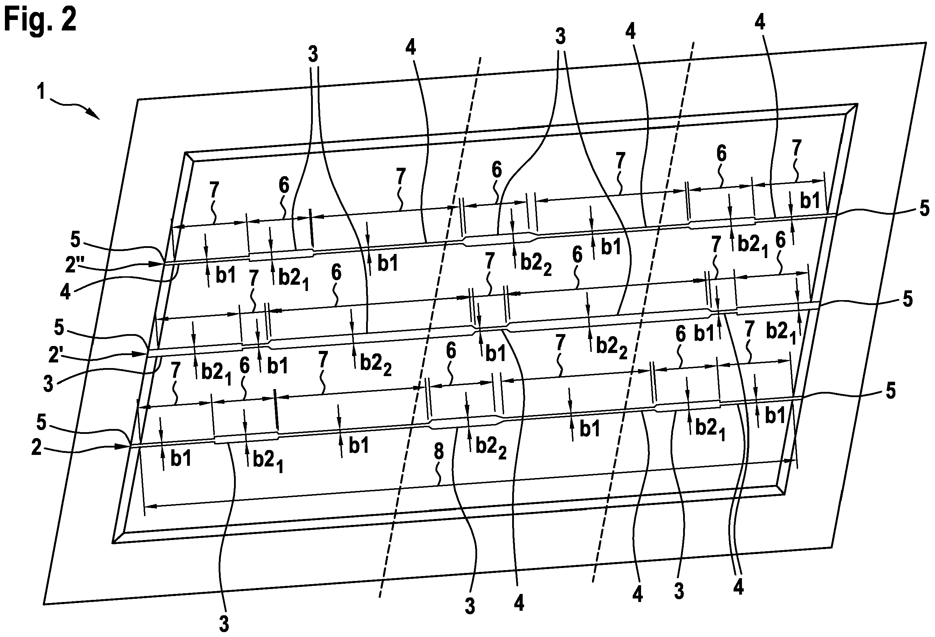

Die Fig. 2 zeigt eine Draufsicht auf einen anderen Profilblock 1 eines Laufstreifsteifens eines erfindungsgemäßen Fahrzeugluftreifens. Die Ausführungsform der Fig. 2 unterscheidet sich lediglich durch die Ausbildung des mittleren Feineinschnittes 2' von der Ausführungsform der Fig. 1.

Der mittlere Feineinschnitt 2' weist vier Schneetaschen 3 auf, von denen je eine Schneetasche 3 an jedem Ende dieses Feineinschnittes 5 als End-Abschnitt angeordnet ist und die zwei weiteren Schneetaschen 3 sind derart über die Längserstreckung des Feineinschnittes 2' verteilt, dass Abschnitte der größeren Breite 3 mit Abschnitten der ersten Breite 4 abwechseln. Die beiden äußeren Schneetaschen 3 dieses mittleren Feineinschnittes 2' weisen die eine größere erste Breite b2₁ von etwa 0,4 mm auf und die beiden mittleren Schneetaschen 3 weisen eine größere zweite Breite b2₂ von 0,6 mm auf, wobei die Breite, b2_{1,2} im Wesentlichen konstant ist. Die erste Breite b1 beträgt etwa 0,2 mm. Die Längen der Abschnitte dieser Feineinschnitte 2, 2" betragen, betrachtet entlang der Längserstreckung von links nach rechts: Länge der Schneetasche 6 von etwa 7 mm, Länge des Abschnittes der ersten üblichen Breite 7 von etwa 2 mm, Länge der Schneetasche 6 von etwa 16 mm, Länge des Abschnittes der ersten üblichen Breite 7 von etwa 2 mm, Länge der Schneetasche 6 von etwa 16 mm, Länge des Abschnittes der ersten übliche Breite von etwa 2 mm und Länge der Schneetasche 6 von etwa 6 mm.

Der Übergang von der größeren Breite zur ersten Breite bzw. der Übergang von der ersten Breite zur größeren Breite ist durch je eine Gerade gebildet, welche mit der Längsrichtung des Abschnittes der ersten Breite einen Winkel α bzw. β in einem Bereich von 90° bis 140° einschließt. Die Winkel α bzw. β entsprechen denen der Fig. 1 und sind in der Fig. 2 nicht ausgewiesen.

### Bezugsziffernliste

- 1: Profilblock
- 2: Feineinschnitt
- 2': Feineinschnitt
- 2": Feineinschnitt
- 3: Schneetasche (Abschnitt größerer Breite)
- 4: Abschnitt erster üblicher Breite
- 5: Ende Feineinschnitt
- 6: Länge der Schneetasche
- 7: Länge des Abschnittes erster üblicher Breite
- 8: Länge des Feineinschnittes

- b1: erste Breite
- b2_{1,2}: größere Breite

## Patentansprüche

1. Fahrzeugluftreifen für Personenkraftwagen, insbesondere für den Einsatz unter winterlichen Fahrbedingungen, mit einem Laufstreifenprofil mit zumindest einer in Umfangsrichtung umlaufenden Blockreihe, deren Profilblöcke (1) durch Querrillen voneinander getrennt sind und deren Profilblöcke (1) in Draufsicht mit zumindest zwei, im Wesentlichen als Gerade ausgebildeten Feineinschnitten (2,2',2") versehen sind, welche etwa parallel zueinander angeordnet sind, wobei jeder Feineinschnitt (2,2',2") in Draufsicht eine Breite (b1) von 0,1 bis 0,6 mm und wenigstens einen Abschnitt (3) einer größeren Breite (b2) in Funktion einer Schneetasche (3) aufweist, wobei - in Draufsicht - in Längserstreckung des Feineinschnittes wenigstens zwei Abschnitte (3) der größeren Breite (b2_{1,2}) angeordnet sind, welche beabstandet zueinander angeordnet sind, so dass Abschnitte (4) der ersten Breite (b1) mit den Abschnitten (3) der größeren Breite (b2_{1,2}) einander abwechseln und dass entlang einer gedachten Geraden, welche etwa senkrecht auf der Längsachse eines Feineinschnittes (2,2',2 ") steht, bei zwei unmittelbar benachbarten Feineinschnitten (2,2',2") der eine Feineinschnitt (2,2',2") die erste Breite (b1) und der unmittelbar benachbarte Feineinschnitt (2,2',2") die größere Breite (b2_{1,2}) aufweist,
**dadurch gekennzeichnet,**
**dass** die Abschnitte der größeren Breite (b2_{1,2}) innerhalb eines Profilblocks zwei bis n unterschiedliche Breiten, bevorzugt 2 bis 4 unterschiedliche Breiten, besonders bevorzugt 2 unterschiedliche Breiten aufweisen.

2. Fahrzeugluftreifen nach Anspruch 1, **dadurch gekennzeichnet, dass** die größere Breite (b2), also die Breite der Schneetaschen (3) um 1,3 x bis 5 x, vorzugsweise um 1,5 x bis 3 x breiter als die erste Breite (b1) ist.

3. Fahrzeugluftreifen nach Anspruch 1 oder 2, **dadurch gekennzeichnet, dass** die Schneetaschen (3) eine im Wesentlichen konstante größere Breite (b2) aufweisen.

4. Fahrzeugluftreifen nach einem oder mehreren der vorangehenden Ansprüche, **dadurch gekennzeichnet, dass** die größere Breite (b2) der Schneetaschen (3) in einem Bereich von 0,4 bis 1,5 mm liegt, bevorzugt in einem Bereich von 0,6 bis 0,9 mm liegt.

5. Fahrzeugluftreifen nach einem oder mehreren der vorangehenden Ansprüche, **dadurch gekennzeichnet, dass** die erste Breite (b1) etwa 0,4 mm und eine erste größere Breite (b2₁) etwa 0,6 mm und eine zweite größere Breite (b2₂) etwa 0,8 mm beträgt.

6. Fahrzeugluftreifen nach einem oder mehreren der vorangehenden Ansprüche, **dadurch gekennzeichnet, dass** zwei oder drei Feineinschnitte (2,2',2") in einem Profilblock (1) angeordnet sind, von denen jeder mit Schneetaschen (3) versehen ist.

7. Fahrzeugluftreifen nach einem oder mehreren der vorangehenden Ansprüche, **dadurch gekennzeichnet, dass** die Blockreihe eine Schulterblockreihe ist.

8. Fahrzeugluftreifen nach einem oder mehreren der vorangehenden Ansprüche, **dadurch gekennzeichnet, dass** innerhalb eines Feineinschnittes (2,2',2") wenigstens alle mittig angeordneten Abschnitte (4) der ersten Breite (b1) gleiche Längen (7) aufweisen und dass wenigstens alle mittig angeordneten Abschnitte (3) der größeren Breite (b2) gleiche Längen (6) aufweisen.

9. Fahrzeugluftreifen nach einem oder mehreren der vorangehenden Ansprüche 1 bis 6, **dadurch gekennzeichnet, dass** innerhalb eines Feineinschnittes (2,2',2") alle Abschnitte (4) der ersten Breite (b1) eine ungleiche Länge aufweisen und/oder dass alle Abschnitte (3) der größeren Breite (b2) eine ungleiche Länge aufweisen.

10. Fahrzeugluftreifen nach einem oder mehreren der vorangehenden Ansprüche, **dadurch gekennzeichnet, dass** jeder zweite Feineinschnitt (2,2',2") eines Profilblockes (1) in etwa gleich ausgebildet ist.

11. Fahrzeugluftreifen nach einem oder mehreren der vorangehenden Ansprüche, **dadurch gekennzeichnet, dass** zumindest unmittelbar benachbarte Feineinschnitte (2,2',2") eines Profilblockes (1) ungleiche Längen (6, 7) der Abschnitte (3, 4) der ersten Breite (b1) und/oder der größeren Breite (b2) aufweisen.

12. Fahrzeugluftreifen nach einem oder mehreren der vorangehenden Ansprüche, **dadurch gekennzeichnet, dass** die Länge (7) eines Abschnittes (4) der ersten Breite (b1) und/oder eines Abschnittes (3) der größeren Breite (b2) zwischen 3% und 45% der Länge des Feineinschnittes (8) entspricht.

13. Fahrzeugluftreifen nach einem oder mehreren der vorangehenden Ansprüche, **dadurch gekennzeichnet, dass** der Übergang von der ersten Breite (b1) zur größeren Breite (b2) bzw. von der größeren Breite (b2) zur ersten Breite (b1) sprunghaft oder kontinuierlich erfolgt, wobei der kontinuierliche Übergang vorzugsweise gradlinig, konkav, konvex oder in einer Funktion höherer Ordnung erfolgt.

14. Fahrzeugluftreifen nach Anspruch 13, **dadurch gekennzeichnet, dass** der Übergang von der ersten Breite (b1) zur größeren Breite (b2) und der Übergang von der größeren Breite (b2) zur ersten Breite (b1) bei einer Schneetasche gleich oder verschieden ausgebildet ist.

15. Fahrzeugluftreifen nach Anspruch 14, **dadurch gekennzeichnet, dass** der Übergang von der ersten Breite (b1) zur größeren Breite (b2) und vice versa durch je eine Gerade gebildet ist, wobei diese Gerade mit der Längsrichtung des Feineinschnittes einen Winkel α bzw. β in einem Bereich von 90° bis 170° einschließt und wobei die größten Winkel in dem mittigen Bereich der Profilblockoberfläche und die kleinsten Winkel an den Enden (5) der Feineinschnitte (2,2',2") angeordnet sind.

## Claims

1. Pneumatic vehicle tyre for passenger cars, in particular for use in winter driving conditions, with a tread pattern comprising at least one row of tread bars running around in the circumferential direction, the tread bars (1) of which are separated from one another by transverse grooves and the tread bars (1) of which are provided in plan view with at least two sipes (2, 2', 2''), substantially formed as a straight line, which are arranged approximately parallel to one another, wherein each sipe (2, 2', 2") has in plan view a width (b1) of 0.1 to 0.6 mm and at least one portion (3) of a greater width (b2) to act as a snow pocket (3), wherein - in plan view - there are arranged in the longitudinal extent of the sipe at least two portions (3) of the greater width (b2_{1,2}), which are arranged spaced apart from one another, so that portions (4) of the first width (b1) alternate with the portions (3) of the greater width (b2_{1,2}) and that, along an imaginary straight line that is approximately perpendicular to the longitudinal axis of a sipe (2, 2', 2"), where there are two directly adjacent sipes (2, 2', 2") the one sipe (2, 2', 2") has the first width (b1) and the directly adjacent sipe (2, 2', 2") has the greater width (b2_{1,2}),
**characterized**
**in that** the portions of the greater width (b2_{1,2}) within a tread bar have two to n different widths, preferably 2 to 4 different widths, particularly preferably 2 different widths.

2. Pneumatic vehicle tyre according to Claim 1, **characterized in that** the greater width (b2), that is to say the width of the snow pockets (3), is 1.3 × to 5 times, preferably 1.5 × to 3 times, wider than the first width (b1).

3. Pneumatic vehicle tyre according to Claim 1 or 2, **characterized in that** the snow pockets (3) have a substantially constant greater width (b2).

4. Pneumatic vehicle tyre according to one or more of the preceding claims, **characterized in that** the greater width (b2) of the snow pockets (3) lies in a range from 0.4 to 1.5 mm, preferably in a range from 0.6 to 0.9 mm.

5. Pneumatic vehicle tyre according to one or more of the preceding claims, **characterized in that** the first width (b1) is approximately 0.4 mm and a first greater width (b2₁) is approximately 0.6 mm and a second greater width (b2₂) is approximately 0.8 mm.

6. Pneumatic vehicle tyre according to one or more of the preceding claims, **characterized in that** two or three sipes (2, 2', 2") are arranged in a tread bar (1), each of which is provided with snow pockets (3).

7. Pneumatic vehicle tyre according to one or more of the preceding claims, **characterized in that** the row of tread bars is a row of shoulder tread bars.

8. Pneumatic vehicle tyre according to one or more of the preceding claims, **characterized in that**, within a sipe (2, 2', 2"), at least all of the centrally arranged portions (4) of the first width (b1) have equal lengths (7) and **in that** at least all of the centrally arranged portions (3) of the greater width (b2) have equal lengths (6).

9. Pneumatic vehicle tyre according to one or more of the preceding Claims 1 to 6, **characterized in that**, within a sipe (2, 2', 2"), all of the portions (4) of the first width (b1) have an unequal length and/or in that all of the portions (3) of the greater width (b2) have an unequal length.

10. Pneumatic vehicle tyre according to one or more of the preceding claims, **characterized in that** every second sipe (2, 2', 2") of a tread bar (1) is formed approximately the same.

11. Pneumatic vehicle tyre according to one or more of the preceding claims, **characterized in that** at least directly adjacent sipes (2, 2', 2") of a tread bar (1) have unequal lengths (6, 7) of the portions (3, 4) of the first width (b1) and/or of the greater width (b2).

12. Pneumatic vehicle tyre according to one or more of the preceding claims, **characterized in that** the length (7) of a portion (4) of the first width (b1) and/or of a portion (3) of the greater width (b2) corresponds to between 3% and 45% of the length of the sipe (8).

13. Pneumatic vehicle tyre according to one or more of the preceding claims, **characterized in that** the transition from the first width (b1) to the greater width (b2) or from the greater width (b2) to the first width (b1) takes place abruptly or continuously, wherein the continuous transition preferably takes place as a straight line, concavely, convexly or in accordance with a higher-order function.

14. Pneumatic vehicle tyre according to Claim 13, **characterized in that** the transition from the first width (b1) to the greater width (b2) and the transition from the greater width (b2) to the first width (b1) in the case of a snow pocket is formed the same or differently.

15. Pneumatic vehicle tyre according to Claim 14, **characterized in that** the transition from the first width (b1) to the greater width (b2) and vice versa is formed in each case by a straight line, wherein this straight line forms with the longitudinal direction of the sipe an angle α or β in a range from 90° to 170° and wherein the largest angles are arranged in the central region of the tread bar surface and the smallest angles are arranged at the ends (5) of the sipes (2, 2', 2").

## Revendications

1. Pneumatique de véhicule pour voitures de tourisme, en particulier pour l'utilisation dans des conditions de conduite hivernales, comprenant un profil de bande de roulement avec au moins une rangée de blocs s'étendant sur le pourtour dans la direction périphérique, dont les blocs profilés (1) sont séparés les uns des autres par des rainures transversales et dont les blocs profilés (1), en vue de dessus, sont pourvus d'au moins deux fines entailles (2, 2', 2") réalisées sous forme essentiellement droite, qui sont disposées approximativement parallèlement les unes aux autres, chaque fine entaille (2, 2', 2"), en vue de dessus, présentant une largeur (b1) de 0,1 à 0,6 mm et au moins une portion (3) de plus grande largeur (b2) ayant la fonction d'une poche à neige (3), au moins deux portions (3) de plus grande largeur (b2_{1,2}) étant disposées en vue de dessus dans l'étendue longitudinale de la fine entaille, lesquelles sont disposées à distance les unes des autres de telle sorte que des portions (4) de première largeur (b1) alternent avec les portions (3) de plus grande largeur (b2_{1,2}) et que, le long d'une droite imaginaire qui est approximativement perpendiculaire à l'axe longitudinal d'une fine entaille (2, 2', 2"), lorsque deux fines entailles (2, 2', 2") sont immédiatement adjacentes, l'une des fines entailles (2, 2', 2") présente la première largeur (b1) et la fine entaille immédiatement adjacente (2, 2', 2") présente la plus grande largeur (b2_{1,2}),
**caractérisé en ce que**
les portions de plus grande largeur (b2_{1,2}) à l'intérieur d'un bloc profilé présentent deux à n largeurs différentes, de préférence 2 à 4 largeurs différentes, particulièrement préférablement 2 largeurs différentes.

2. Pneumatique de véhicule selon la revendication 1, **caractérisé en ce que** la plus grande largeur (b2), c'est-à-dire la largeur des poches à neige (3), est de préférence 1,3 à 5 fois, de préférence 1,5 à 3 fois plus large que la première largeur (b1).

3. Pneumatique de véhicule selon la revendication 1 ou 2, **caractérisé en ce que** les poches à neige (3) présentent une plus grande largeur (b2) essentiellement constante.

4. Pneumatique de véhicule selon l'une quelconque ou plusieurs des revendications précédentes, **caractérisé en ce que** la plus grande largeur (b2) des poches à neige (3) est comprise dans une plage de 0,4 à 1,5 mm, de préférence dans une plage de 0,6 à 0,9 mm.

5. Pneumatique de véhicule selon l'une quelconque ou plusieurs des revendications précédentes, **caractérisé en ce que** la première largeur (b1) mesure environ 0,4 mm et une première plus grande largeur (b2₁) mesure environ 0,6 mm et une deuxième plus grande largeur (b2₂) mesure environ 0,8 mm.

6. Pneumatique de véhicule selon l'une quelconque ou plusieurs des revendications précédentes, **caractérisé en ce que** deux ou trois fines entailles (2, 2', 2") sont disposées dans un bloc profilé (1), chacune d'entre elles étant pourvue de poches à neige (3).

7. Pneumatique de véhicule selon l'une quelconque ou plusieurs des revendications précédentes, **caractérisé en ce que** la rangée de blocs est une rangée de blocs d'épaulement.

8. Pneumatique de véhicule selon l'une quelconque ou plusieurs des revendications précédentes, **caractérisé en ce qu'**à l'intérieur d'une fine entaille (2, 2', 2"), au moins toutes les portions de première largeur (b1) disposées centralement (4) présentent des longueurs identiques (7) et **en ce qu'**au moins toutes les portions de plus grande largeur (b2) disposées centralement (3) présentent des longueurs identiques (6).

9. Pneumatique de véhicule selon l'une quelconque ou plusieurs des revendications précédentes 1 à 6, **caractérisé en ce qu'**a l'intérieur d'une fine entaille (2, 2', 2"), toutes les portions (4) de première largeur (b1) présentent une longueur différente et/ou **en ce que** toutes les portions (3) de plus grande largeur (b2) présentent une longueur différente.

10. Pneumatique de véhicule selon l'une quelconque ou plusieurs des revendications précédentes, **caractérisé en ce qu'**une fine entaille (2, 2', 2") sur deux d'un bloc profilé (1) est réalisée approximativement de manière identique.

11. Pneumatique de véhicule selon l'une quelconque ou plusieurs des revendications précédentes, **caractérisé en ce que** des fines entailles (2, 2', 2") au moins immédiatement adjacentes d'un bloc profilé (1) présentent des longueurs différentes (6, 7) des portions (3, 4) de première largeur (b1) et/ou de plus grande largeur (b2).

12. Pneumatique de véhicule selon l'une quelconque ou plusieurs des revendications précédentes, **caractérisé en ce que** la longueur (7) d'une portion (4) de première largeur (b1) et/ou d'une portion (3) de plus grande largeur (b2) correspond à 3 % à 45 % de la longueur de la fine entaille (8) .

13. Pneumatique de véhicule selon l'une quelconque ou plusieurs des revendications précédentes, **caractérisé en ce que** la transition de la première largeur (b1) à la plus grande largeur (b2) ou de la plus grande largeur (b2) à la première largeur (b1) s'effectue par sauts ou en continu, la transition continue s'effectuant de préférence en ligne droite, de manière concave, convexe ou suivant une fonction d'ordre plus élevé.

14. Pneumatique de véhicule selon la revendication 13, **caractérisé en ce que** la transition de la première largeur (b1) à la plus grande largeur (b2) et la transition de la plus grande largeur (b2) à la première largeur (b1) est réalisée de manière identique ou différente pour une poche à neige.

15. Pneumatique de véhicule selon la revendication 14, **caractérisé en ce que** la transition de la première largeur (b1) à la plus grande largeur (b2) et vice versa est formée à chaque fois par une droite, cette droite formant avec la direction longitudinale de la fine entaille un angle α ou β dans une plage de 90° à 170° et le plus grand angle se trouvant dans la région centrale de la surface du bloc profilé et le plus petit angle se trouvant au niveau des extrémités (5) des fines entailles (2, 2', 2").
